# DEMANDE DE BREVET EUROPEEN

(11) **EP 4 447 275 A1**
(43) Date de publication de la demande: **16.10.2024**
(21) Numéro de dépôt: 24170078.0
(22) Date de dépôt: 12.04.2024
(51) Int. Cl.: H02K 1/276, H02K 1/32

(54) **MONTAGE RÉVERSIBLE D'AIMANT PERMANENT DANS UNE MACHINE ÉLECTRIQUE**

(30) Priorité: 14.04.2023 FR 2303748
(71) Demandeur: COMMISSARIAT À L'ÉNERGIE ATOMIQUE ET AUX ÉNERGIES ALTERNATIVES, 75015 Paris (FR)
(72) Inventeur: DELETTE, Gérard, 38054 Grenoble cedex 09 (FR); DAYDE, Hugo, 38054 Grenoble cedex 09 (FR)
(74) Mandataire: Atout PI Laplace

(57) **Abrégé**

L'invention concerne une machine électrique à rotor à aimants permanents, le rotor (14) pouvant tourner autour d'un axe de rotation (16) par rapport à un stator de la machine électrique, le rotor (14) comprenant un circuit magnétique (22) et au moins un aimant permanent (20), le circuit magnétique (22) étant configuré pour guider le flux magnétique généré par l'aimant permanent (20), l'aimant permanent (20) s'étendant selon l'axe de rotation (16) et présentant une forme générale de section radiale adaptée à générer le flux magnétique, le circuit magnétique (22) comprenant une cavité (26) configurée pour contenir l'aimant permanent (20), la cavité (26) étant au contact de l'aimant permanent (20), dans laquelle l'aimant permanent (20) comprend au moins un alésage (32) s'étendant parallèlement à l'axe de rotation (16), dans laquelle le rotor (14) comprend autant de tiges (34) que d'alésages (32), chaque tige (34) étant ajustée dans l'alésage (32) correspondant et étant fixée au circuit magnétique (22).

## Description

L'invention concerne les machines électriques utilisées dans des domaines très variés tels que le transport, l'industrie, la génération électrique... De plus en plus de machines électriques à aimants permanents sont mises en oeuvre. Ces machines permettent notamment d'éviter le recours aux rotors bobinés nécessitant un raccordement électrique.

Les aimants permanents sont réalisés en matériaux ferromagnétiques dit durs, c'est-à-dire présentant un cycle d'hystérésis large. Au milieu du XXième siècle des alliages fer-nickel-aluminium auxquels on peut ajouter du cobalt ont contribué à l'essor des aimants permanents. Plus récemment l'utilisation de certaines terres rares, notamment de la famille des lanthanides tels que le samarium, le cérium et le néodyme ont permis d'augmenter nettement les champs coercitifs de désaimantation des aimants. Aujourd'hui, des alliages de néodyme-fer-bore (NdFeB) sont largement mis en oeuvre.

Afin de limiter l'emploi de ressources naturelles, on cherche à recycler au maximum les équipements complexes arrivés en fin de vie. Pour ce faire, il est nécessaire de séparer les différents composants des équipements afin de traiter séparément ces composants, chacun par une filière de recyclage qui lui est propre.

Le recyclage des disques durs informatiques contenant des aimants de type NdFeB a été très étudié. Une technique de décrépitation sous hydrogène conduisant à la fragmentation des disques durs permet de séparer et récupérer les aimants sous forme de poudre.

Les moteurs électriques de traction ont récemment beaucoup progressé, notamment dans l'automobile. L'augmentation de la vitesse de rotation des machines électriques utilisées, notamment comme moteurs dans l'automobile, pose des problèmes de maintien mécanique des aimants dans les rotors qui en sont équipés. Pour assurer ce maintien mécanique, le montage des aimants en surface est souvent remplacé par un montage enterré à l'intérieur de paquets de tôles formant un circuit magnétique assurant le guidage du flux magnétique généré par les aimants. Pour le recyclage de ces nouvelles machines électriques de traction, l'approche mise en oeuvre pour les disques durs informatique n'est pas applicable du fait de la masse beaucoup plus importante de l'ordre de plusieurs kg d'aimants de type NdFeB et du fait de la fixation des aimants dans les paquets de tôle par une accroche adhésive (à l'aide de résines) et par une accroche mécanique (picots, poinçons). Pour ces moteurs, le retrait des aimants nécessite de compenser l'adhésion et le maintien mécanique des aimants insérés dans les paquets de tôles. Les aimants doivent donc être extraits par des moyens mécaniques combinés à des traitements thermiques permettant de réduire l'accrochage des résines. Les traitements thermiques sont contraignants car réalisés sur des moteurs entiers avec comme objectif de dégrader les colles utilisées pour la fixation des aimants et de démagnétiser les aimants pour réduire les forces magnétiques qui bloquent les aimants ou tendent à les agglomérer. Dans certaines machines électriques où les aimants sont encastrés, lors de la fabrication, au sein des tôles internes des rotors, pour extraire les aimants, il est nécessaire de mettre en oeuvre des moyens mécaniques importants tels que des éjecteurs mus par une presse hydraulique. Ces moyens mécaniques nécessitent des investissements importants difficiles à supporter par les filières de recyclage. De plus, ce type investissement ne peut être rentabilisé qu'avec une standardisation dans la topologie des machines électriques et la mise en place d'une filière en amont pour augmenter les volumes.

Par ailleurs, les efforts mécaniques mis en oeuvre peuvent impacter la qualité des aimants récupérés compte tenu de la fragilité des matériaux de ceux-ci.

. Enfin, la présence de résine de collage résiduelle, en surface des aimants après extraction, réduit la valeur des aimants car elle constitue une source de pollution lors des étapes de recyclage des aimants. Une étape de surfaçage des aimants et donc nécessaire à l'issue de l'extraction mais cette opération est compliquée si les aimants sont endommagés ou fragmentés. Pour toutes ces raisons techniques et l'absence de réglementation contraignante, le recyclage des aimants en fin de vie, notamment ceux issus des moteurs à aimants enterrés, n'est pas développé à grande échelle malgré le potentiel en terme de valorisation des matières critiques.

A cet effet, l'invention a pour objet une machine électrique à rotor à aimants permanents, le rotor pouvant tourner autour d'un axe de rotation par rapport à un stator de la machine électrique, le rotor comprenant un circuit magnétique et au moins un aimant permanent, le circuit magnétique étant configuré pour guider le flux magnétique généré par l'aimant permanent, l'aimant permanent s'étendant selon l'axe de rotation et présentant une forme générale de section radiale adaptée à générer le flux magnétique, le circuit magnétique comprenant une cavité configurée pour contenir l'aimant permanent, la cavité étant au contact de l'aimant permanent,
dans laquelle l'aimant permanent comprend au moins un alésage s'étendant parallèlement à l'axe de rotation,
dans laquelle le rotor comprend autant de tiges que d'alésages, chaque tige étant ajustée dans l'alésage correspondant et étant fixée au circuit magnétique.

Avantageusement, chaque tige est fixée au circuit magnétique par l'intermédiaire d'une première plaque fixée au circuit magnétique, plaque dans laquelle la ou les tiges sont fixées à une de leurs extrémités.

Avantageusement, le rotor comprend une seconde plaque guidant la ou les tiges à une seconde de leurs extrémités, la seconde plaque étant fixée au circuit magnétique.

Avantageusement la ou les tiges sont fixées à la seconde plaque.

Avantageusement le rotor comprend :
- plusieurs étages d'aimants permanents,
- plusieurs étages de circuits magnétiques recevant chacun un étage d'aimants permanents,
   et les étages de circuits magnétiques sont empilés selon l'axe de rotation.

Avantageusement, le rotor comprend en outre une plaque intercalaire disposée entre chaque couple d'étages consécutifs de circuits magnétiques, la ou les plaques intercalaires comprenant autant de perçages que de tiges, les perçages étant traversés par les tiges.

Avantageusement, le rotor comprend, solidaires de la première plaque ou de la seconde plaque, autant de raidisseurs que d'aimants permanents par étage, le ou les raidisseurs étant disposés en regard de chaque aimant permanent de chaque étage et s'étendant parallèlement à l'axe de rotation, le ou les raidisseurs étant chacun ajusté dans une rainure de chaque circuit magnétique, la rainure s'étendant parallèlement à l'axe de rotation.

Avantageusement, le ou les raidisseurs sont fixés aux deux plaques.

Avantageusement, chaque raidisseur comprend une excroissance disposée entre chaque couple d'étages consécutifs d'aimants permanents, chaque excroissance comprenant autant d'alésages que de tiges traversant les aimants permanents associés au raidisseur considéré, chaque alésage étant ajusté à la tige qui le traverse.

Avantageusement, chaque tige est configurée pour conduire un fluide caloporteur destiné à refroidir le rotor.

L'invention sera mieux comprise et d'autres avantages apparaîtront à la lecture de la description détaillée d'un mode de réalisation donné à titre d'exemple, description illustrée par le dessin joint dans lequel :
la figure 1 représente schématiquement en perspective une machine électrique selon l'invention ;
la figure 2 représente en coupe partielle le rotor de la machine électrique représentée sur la figure 1 ;
la figure 3 représente en perspective deux plaques et des tiges du rotor illustré sur la figure 2 ;
la figure 4 représente en vue éclatée le rotor illustré sur la figure 2 ;
la figure 5 illustre partiellement une variante de rotor de la machine électrique représentée sur la figure 1 ;
la figure 6 illustre un exemple de moyen de liaison de raidisseurs et de tiges du rotor de la variante de la figure 5 ;
la figure 7 représente en perspective éclatée, le rotor de la variante de la figure 5 ;
la figure 8 représente schématiquement, un rotor pouvant équiper une machine électrique selon l'invention et équipé d'un circuit de refroidissement.

Par souci de clarté, les mêmes éléments porteront les mêmes repères dans les différentes figures.

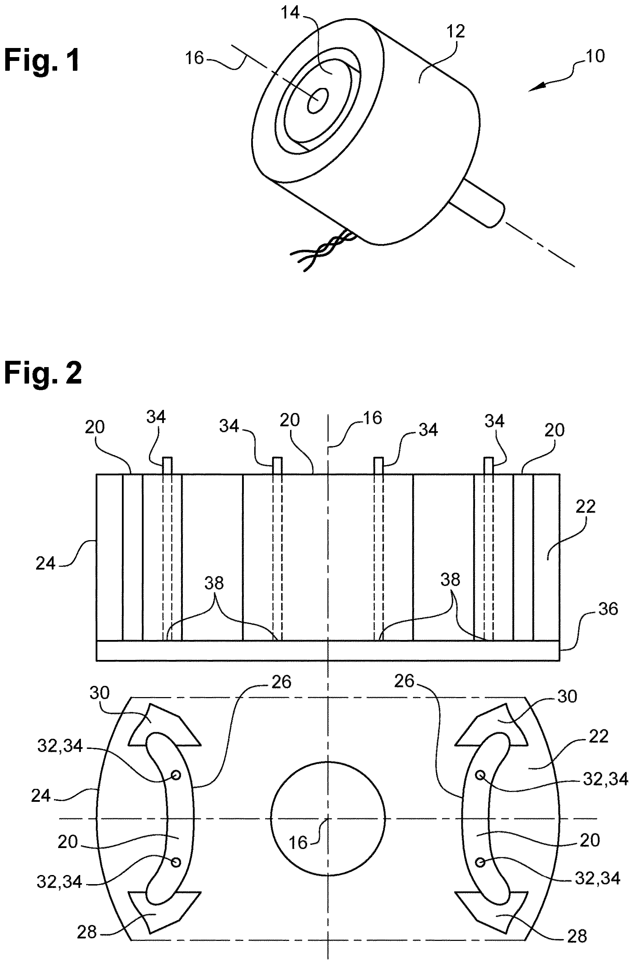

La figure 1 représente en perspective une machine électrique 10 comprenant un stator 12 et un rotor 14 pouvant tourner par rapport au stator autour d'un axe de rotation 16. Dans l'exemple représenté, le rotor 14 est un rotor interne et le stator 12 est externe. Il est également possible de mettre en oeuvre l'invention dans une machine électrique à rotor externe et stator interne.

Le stator 12 comprend un bobinage pouvant être alimenté en courant multi phasé, typiquement en triphasé et produisant un champ magnétique tournant à la fréquence d'alimentation. Le rotor 14 comprend un ou plusieurs aimants permanents produisant un champ magnétique tournant avec le champ magnétique du stator lors de la rotation du rotor 14 autour de son axe de rotation 16.

La machine électrique 10 peut fonctionner en moteur en transformant de l'énergie électrique en énergie mécanique ou en générateur en transformant de l'énergie mécanique en énergie électrique.

La figure 2 représente en coupe partielle le rotor 14 de la machine électrique 10. La partie supérieure de la figure 2 représente le rotor 14 dans un plan contenant l'axe de rotation 16 et la partie inférieure de la figure 2 représente le rotor 14 dans un plan perpendiculaire à l'axe de rotation 16.

La machine électrique 10 comprend un circuit magnétique 22 dans lequel sont disposés un ou plusieurs aimants permanents 20 répartis radialement autour de l'axe 16. Dans le cas d'une pluralité d'aimants permanents 20 ceux-ci sont identiques et trois sont représentés dans la partie supérieure de la figure 2. Lors du fonctionnement de la machine électrique 10, le champ magnétique généré par les différents aimants permanents 20 s'accroche au champ magnétique tournant généré au stator 12. Le circuit magnétique 22 canalise le champ magnétique généré par les aimants permanents 20.

Les aimants permanents 20 peuvent être disposés dans des encoches du circuit magnétique 22 et affleurer à la surface extérieure du rotor 14 en regard du stator. Alternativement les aimants permanents 20 peuvent être enterrés dans le circuit magnétique 22. Cette disposition permet notamment d'augmenter la vitesse de rotation de la machine électrique 10 en évitant le risque de décollement des aimants permanents 20 du circuit magnétique 22. Entre ces deux alternatives, il est également possible de prévoir des aimants permanents 20 en partie enterrés et en partie affleurant.

Les aimants permanents 20 représentés sur la figure 2 n'affleurent pas de la surface extérieure 24 du rotor 14. Ils sont identiques et possèdent une section dont une partie de forme concave s'ouvre en direction du stator 12, c'est-à-dire vers le haut de la figure 2, ceci afin de créer une concentration de flux magnétique et une induction plus élevée dans l'entrefer entre le rotor14 et le stator 12. La section de chaque aimant permanent 20 est constante sur la majeure partie de la longueur du rotor 14 définie selon l'axe de rotation 16.

Pour chaque aimant permanent 20, le circuit magnétique 22 comprend une cavité 26 configurée pour contenir l'aimant permanent 20 concerné. La cavité 26 est au contact de l'aimant permanent 20. Plus précisément la forme de la cavité 26 est complémentaire au moins en partie de la forme de l'aimant permanent 20. Comme pour l'aimant permanent 20, la section de la cavité 26 perpendiculairement à l'axe 16 est constante sur la majeure partie de la longueur du circuit magnétique 22, longueur définie selon l'axe de rotation 16.

le circuit magnétique 22 peut comprendre une ou plusieurs lumières s'ouvrant sur chaque cavité 26. Dans l'exemple représenté, pour chaque cavité 26, le circuit magnétique 22 comprend deux lumières 28 et 30. Dans chacune des lumières 28 et 30, la surface extérieure de l'aimant permanent 20 est à distance du circuit magnétique 22. Les lumières 28 forment une barrière au flux magnétique généré par l'aimant permanent 20. Autrement dit, le flux magnétique généré par l'aimant permanent 20 tend à contourner majoritairement les lumières pour se concentrer dans le circuit magnétique 22 dont la perméabilité est beaucoup plus forte que celle du vide ou de l'air contenu dans les lumières 28 et 30.

La forme générale de l'aimant permanent 20 et celle du circuit magnétique 22 sont définies en combinaison avec le stator 12 pour optimiser le cheminement des flux magnétiques dans la machine électrique 10. La forme de la section des aimants permanents 20 et la présence éventuelle des lumières 28 et 30 sont notamment adaptées à cette optimisation.

La forme en représentée sur la figure 2 permet d'éviter que les aimants permanents 20 ne bougent dans leur cavité respective autour de l'axe 16. Cette immobilisation des aimants permanents 20 présente cependant des limites. En effet, lors du fonctionnement de la machine électrique, la rotation du rotor 14, génère des forces d'inertie qui peuvent être importantes et qui peuvent donc entrainer certains petits déplacements des aimants permanents 20 par rapport à leur cavité respective. Ceci est d'autant plus gênant que la concavité de la forme de l'aimait permanent est faible.

L'invention permet d'améliorer le maintien mécanique des aimants permanents 20 dans le circuit magnétique 22 quelle que soit la forme des aimants permanents 20. Le maintien mécanique de l'invention permet de désolidariser les aimants permanent 20 du circuit magnétique 22, notamment en cas de réparation et en fin de vie de la machine électrique 10 afin de faciliter le recyclage des différents composants de la machine électrique 10.

A cet effet, chaque aimant permanent 20 comprend au moins un alésage 32 s'étendant parallèlement à l'axe de rotation 16. L'alésage 32 traverse l'aimant permanent 20 de part en part. Dans l'exemple représenté, chaque aimant permanent 20 comprend deux alésages 32. Un nombre plus grand d'alésage 32 est bien entendu possible.

Coopérant avec chaque alésage 32, le rotor 14 comprend une tige 34 ajustée dans chaque alésage 32. Autrement dit, le rotor 14 comprend autant de tiges 34 que d'alésages 32. En pratique, les aimants permanents 20 peuvent comprendre d'autres alésages dans lesquels des tiges ne seraient pas insérées. Ces autres alésages pourraient permettre d'insérer, lors du démontage du moteur, des tiges qui viendraient compléter celles déjà en place pour faciliter l'extraction des aimants. Ces tiges complémentaires peuvent alors avoir un rôle de renfort mécanique ou encore permettre le chauffage des aimants afin de permettre leur désaimantation. Ces autres alésages peuvent avoir d'autres fonctions que le maintien mécanique de l'aimant permanent concerné, notamment une fonction magnétique. D'autres alésages peuvent également être prévus en cas de standardisation des aimants permanents 20 pour d'autres types de machines électriques. Pour les besoins de l'invention, on ne considère que les alésages 32 dans lesquels des tiges 34 sont insérées.

Pour assurer l'immobilisation des aimants permanents 20 par rapport au circuit magnétique 22, les tiges 34 sont fixées au circuit magnétique 22. La fixation des tiges 34 peut se faire de différente façon, par exemple en fixant directement une partie recourbée de celles-ci au circuit magnétique 22. Alternativement, comme représenté sur la figure 2, le rotor 14 comprend une plaque 36 fixée au circuit magnétique 22 et aux tiges 34 à une de leurs extrémités 38. La plaque 36 s'étend principalement dans un plan perpendiculaire à l'axe de rotation 16. La plaque 36 peut faire partie intégrante du circuit magnétique 22. Il est possible de réaliser la plaque 36 dans un matériau diamagnétique ou paramagnétique à la différence du circuit magnétique 22 réalisé en matériau ferromagnétique. Les tiges 34 et la plaque 36 ont principalement une fonction de maintien mécanique des aimants permanents 20. En première approche, il est préférable que les plaques 36 soient isolantes magnétiquement pour limiter les fuites magnétiques aux extrémités axiales du rotor 14.

La fixation des tiges 34 au circuit magnétique 22 est avantageusement démontable, afin de faciliter la désolidarisation des aimants permanents 20 du circuit magnétique 22. La plaque 36 peut par exemple être fixée au circuit magnétique 22 par des éléments démontables tels que des vis ou des rivets qu'il est possible d'éliminer lors de l'opération de désolidarisation des aimants permanents 20. La fixation des tiges 34 sur la plaque 36 peut également être démontable. Par exemple l'extrémité 38 de chaque tige 36 peut être filetée afin d'être vissée dans un taraudage de la plaque 36. Tout autre moyen de fixation des tiges 34 sur la plaque 38 est possible, par exemple par rivetage ou soudage.

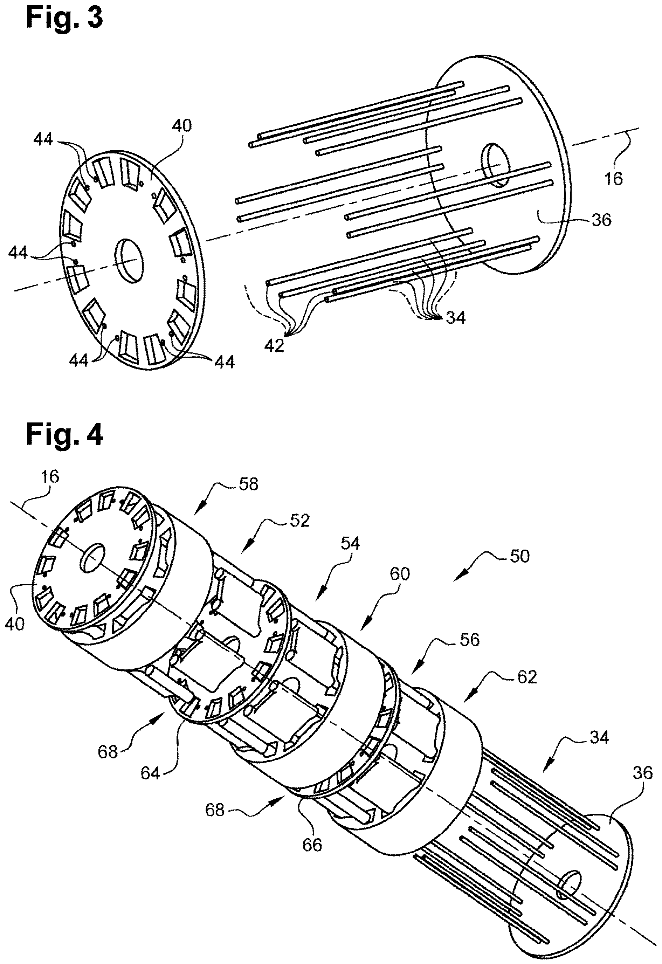

La figure 3 représente en perspective les tiges 36 fixées à la plaque 34 ainsi qu'une seconde plaque 40 permettant d'améliorer la stabilité du maintien mécanique des aimants permanents 20 dans le rotor 14. Pour ne pas surcharger la figure, le circuit magnétique 22 et les aimants permanents 20 ne sont pas représentés sur le figure 3. Plus précisément, la plaque 40 guide les tiges 34 à une seconde de leurs extrémités 42. La plaque 40 est par ailleurs fixée au circuit magnétique 22 par exemple de la même façon que la plaque 36. La plaque 40 peut comprendre des perçages 44 dans chacun desquels peuvent coulisser une tige 34. Ce coulissement permet, pour la mise en place de la plaque 40, d'éviter une chaine de cotes trop serrée dans le montage du rotor 14.

En complément du coulissement, les tiges 34 peuvent être fixées à la plaque 40. La fixation peut être réglable, notamment en fonction de dispersions dans la longueur du circuit magnétique 22, longueur définie le long de l'axe 14. Il est par exemple possible de prévoir un filetage à l'extrémité 42 de chaque tige, ce filetage coulissant dans chaque perçage 44 lisse de la plaque 40, un écrou vissé sur chaque filetage venant verrouiller la position de la plaque 40 en la serrant contre le circuit magnétique 22.

La figure 4 représente en vue éclatée un rotor 50 d'une machine électrique selon l'invention. Pour faciliter et standardiser la fabrication des aimants permanents 20, il peut être préférable qu'il ait une longueur, définie selon l'axe de rotation 16, plus faible que celle du rotor 50. A cet effet, le rotor 50 comprend plusieurs étages aimants permanents 20 empilés. Trois étages 52, 54 et 56 d'aimants permanents 20 empilés selon l'axe de rotation 16 sont représentés sur la figure 4. Chaque étage 52 d'aimants permanents 20 est inséré dans un étage de circuits magnétiques 22, respectivement 58, 60 et 62 comme précédemment décrit à l'aide de la figure 2. En pratique, l'invention peut être mise en oeuvre quel que soit le nombre d'étages.

Avantageusement, la machine électrique 50 comprend en outre une plaque intercalaire disposée entre chaque couple d'étages consécutifs de circuits magnétiques. Dans l'exemple représenté, une plaque intercalaire 64 sépare les étages 58 et 60 et une plaque intercalaire 66 sépare les étages 60 et 62. Les plaques intercalaires 64 et 66 sont semblables à la plaque 40. Les plaques intercalaires 64 et 66 comprennent autant de perçages 68 que de tiges 34. Les perçages 68 sont traversés par les tiges 34. Les plaques intercalaires permettent de rigidifier une sous-structure du rotor constituée par les aimant permanents 20 et les tiges 34 insérées dans les alésages 32 des aimants permanents 20. Les plaques intercalaires permettent de réduire le diamètre des tiges 34 et des alésages 32 correspondants pour une même rigidité des sous-structures. La réduction de diamètre des alésages 32 permet de d'augmenter le volume de matière des aimants permanents 20.

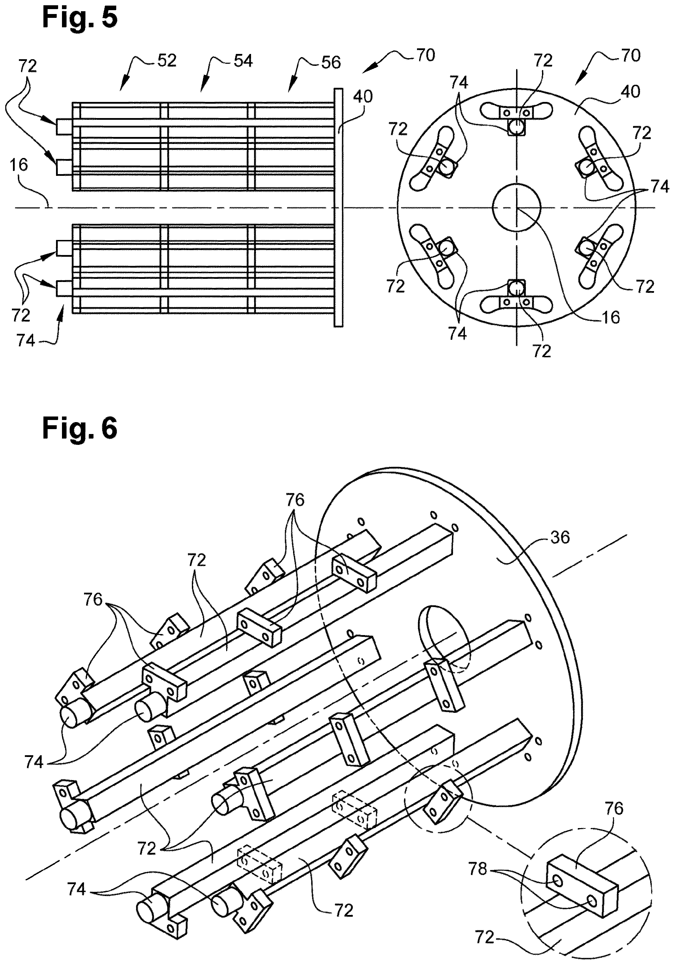

La figure 5 représente partiellement une variante de rotor 70 pouvant être mis en oeuvre dans une machine électrique selon l'invention. Sur la partie gauche de la figure 5, apparaissent les trois étages 52, 54 et 56 d'aimants permanents 20, ainsi que la plaque 40 représentés dans un plan contenant l'axe de rotation 16. La partie droite de la figure 5 représente les mêmes composants du rotor 70 en projection dans un plan perpendiculaire à l'axe 16. Pour ne pas surcharger la figure, les trois étages de circuits magnétiques, 58, 60 et 62 ainsi que les tiges 34 ne sont pas représentées. Alternativement la plaque 40 peut être remplacée par la plaque 36. Dans l'exemple représenté, chaque étage 52, 54 et 56 comprend six aimants permanents 20. Comme évoqué plus haut, l'invention peut être mise en oeuvre quel que soit le nombre d'aimants permanents 20 par étage. Cependant chaque étage 52, 54 et 56 comprend le même nombre d'aimants permanents 20.

Afin d'améliorer la raideur de la sous-structure tiges/aimants du rotor 70, celuici peut comprendre, solidaires de la plaque 40, autant de raidisseurs 72 que d'aimants permanents 20 par étage, en l'occurrence six raidisseurs 72. Les raidisseurs 72 sont disposés en regard de chaque aimant permanent 20 de chaque étage et s'étendent parallèlement à l'axe de rotation 16. Les raidisseurs 72 sont chacun ajustés dans une rainure 74 de chaque circuit magnétique. La rainure 74 s'étend parallèlement à l'axe de rotation 16.

Toujours pour améliorer la raideur du rotor 70, les raidisseurs 72 peuvent être fixés à la plaque 36, non représentée sur la figure 5. Comme pour les tiges 34 qui peuvent être fixées à la plaque 40, les raidisseurs 72 peuvent être filetés à leur extrémité 74 traversant des perçages lisses de la plaque 36 et des écrous assemblés sur les extrémités filetées 74 peuvent assurer la fixation de l'ensemble du rotor 70.

Encore pour améliorer la raideur de la sous-structure tiges/aimants du rotor 70, il est possible de lier les raidisseurs 72 et les tiges 34. La figure 6 illustre un exemple de moyen de liaison des raidisseurs 72 et des tiges 34. La figure 6 représente en perspective la plaque 36 et les raidisseurs 72 équipés de ces moyens. Plus précisément, chaque raidisseur 72 comprend une excroissance 76 disposée entre chaque couple d'étages consécutifs d'aimants permanents 20. Chaque excroissance 76 comprenant autant d'alésages 78 que de tiges 34 traversant les aimants permanents 20 associés au raidisseur 72 considéré. Chaque alésage 78 est ajusté à la tige 34 qui le traverse. De cette façon les aimants sont extraits du rotor et restent en place dans la structure rigidifiée par les raidisseurs 72

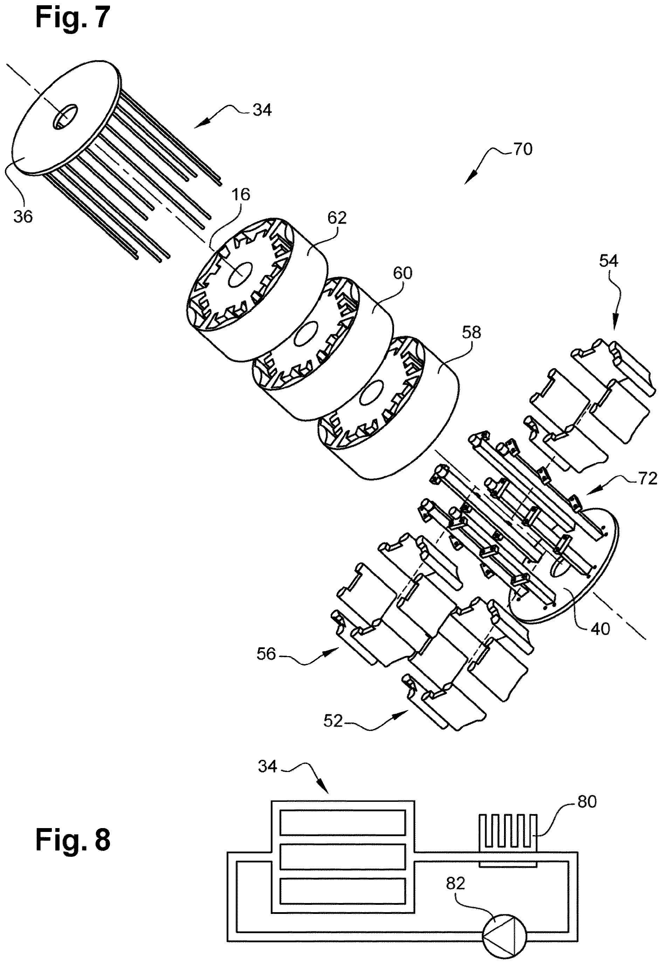

La figure 7 représente en perspective éclatée, le rotor 70 avec ici les trois étages 52, 54, 56 d'aimants permanents 20, les trois étages 58, 60, 62 de circuits magnétiques recevant chacun un des étages d'aimants permanents 20, les tiges 34 et la plaque 36 à laquelle les tiges 34 sont fixées ainsi que les raidisseurs 72 et la plaque 40 à laquelle les raidisseurs 72 sont fixés.

La figure 8 représente schématiquement, un des rotors 14 ou 70 équipé d'un circuit de refroidissement permettant d'évacuer de la chaleur pouvant être produite dans le rotor lors du fonctionnement de la machine électrique. Chaque tige 34 est configurée pour conduire un fluide caloporteur destiné à refroidir le rotor. A cet effet, les tiges 34 peuvent être creuses et ainsi former un canal dans lequel circule un fluide caloporteur. Hors des tiges, le fluide caloporteur circule dans un échangeur 80 pouvant être un radiateur permettant de refroidir le fluide caloporteur par convection dans l'air ambiant. La circulation du fluide caloporteur peut se faire au moyen d'une pompe de circulation 82. Il est possible de faire circuler le fluide caloporteur dans une boucle monophasique ou diphasique, les tiges formant alors un évaporateur et l'échangeur un condenseur. Il est possible de se passer de la pompe de circulation 82 en prévoyant une conduction naturelle telle que réalisée dans un caloduc.

## Revendications

1. Machine électrique à rotor à aimants permanents, le rotor (14 ; 70) pouvant tourner autour d'un axe de rotation (16) par rapport à un stator (12) de la machine électrique (10), le rotor (14 ; 70) comprenant un circuit magnétique (22) et au moins un aimant permanent (20), le circuit magnétique (22) étant configuré pour guider le flux magnétique généré par l'aimant permanent (20), l'aimant permanent (20) s'étendant selon l'axe de rotation (16) et présentant une forme générale de section radiale adaptée à générer le flux magnétique, le circuit magnétique (22) comprenant une cavité (26) configurée pour contenir l'aimant permanent (20), la cavité (26) étant au contact de l'aimant permanent (20),
dans laquelle l'aimant permanent (20) comprend au moins un alésage (32) s'étendant parallèlement à l'axe de rotation (16),
dans laquelle le rotor (14 ; 70) comprend autant de tiges (34) que d'alésages (32), chaque tige (34) étant ajustée dans l'alésage (32) correspondant et étant fixée au circuit magnétique (22).

2. Machine électrique selon la revendication 1 dans laquelle chaque tige (34) est fixée au circuit magnétique (22) par l'intermédiaire d'une première plaque (36) fixée au circuit magnétique (22), plaque (36) dans laquelle la ou les tiges (34) sont fixées à une de leurs extrémités (38).

3. Machine électrique selon la revendication 2, dans laquelle le rotor (14 ; 70) comprend une seconde plaque (40) guidant la ou les tiges (34) à une seconde de leurs extrémités (42), la seconde plaque (40) étant fixée au circuit magnétique (22).

4. Machine électrique selon la revendication 3, dans laquelle la ou les tiges (34) sont fixées à la seconde plaque (40).

5. Machine électrique selon l'une des revendications 3 ou 4, dans laquelle le rotor (14 ; 70) comprend :
- plusieurs étages d'aimants permanents (52, 54, 56),
- plusieurs étages de circuits magnétiques (58, 60, 62) recevant chacun un étage d'aimants permanents (52, 54, 56),
dans laquelle les étages de circuits magnétiques (58, 60, 62) sont empilés selon l'axe de rotation (16).

6. Machine électrique selon la revendication 5, dans laquelle le rotor (14 ; 70) comprend en outre une plaque intercalaire (64, 66) disposée entre chaque couple d'étages consécutifs de circuits magnétiques (58, 60, 62), la ou les plaques intercalaires (64, 66) comprenant autant de perçages (68) que de tiges (34), les perçages (68) étant traversés par les tiges (34).

7. Machine électrique selon l'une des revendications 5 ou 6, dans laquelle le rotor (70) comprend, solidaires de la première plaque (36) ou de la seconde plaque (40), autant de raidisseurs (72) que d'aimants permanents (20) par étage (52, 54, 56), le ou les raidisseurs (72) étant disposés en regard de chaque aimant permanent (70) de chaque étage (52, 54, 56) et s'étendant parallèlement à l'axe de rotation (16), le ou les raidisseurs (72) étant chacun ajusté dans une rainure (74) de chaque circuit magnétique (58, 60, 62), la rainure (74) s'étendant parallèlement à l'axe de rotation (16).

8. Machine électrique selon la revendication 7, dans laquelle le ou les raidisseurs (72) sont fixés aux deux plaques (34, 40).

9. Machine électrique selon la revendication 7, dans laquelle chaque raidisseur (72) comprend une excroissance (76) disposée entre chaque couple d'étages (52, 54, 56) consécutifs d'aimants permanents (20), chaque excroissance (76) comprenant autant d'alésages (78) que de tiges (34) traversant les aimants permanents (20) associés au raidisseur (72) considéré, chaque alésage (78) étant ajusté à la tige (34) qui le traverse.

10. Machine électrique selon l'une des revendications précédentes dans laquelle chaque tige (34) est configurée pour conduire un fluide caloporteur destiné à refroidir le rotor (14 ; 70).
